# EUROPEAN PATENT SPECIFICATION

(11) **EP 4 152 499 B1**
(45) Date of publication and mention of the grant of the patent: **13.08.2025**
(21) Application number: 22796999.5
(22) Date of filing: 30.03.2022
(51) Int. Cl.: H01M 50/209, H01M 50/112, H01M 50/169, H01M 50/249, H01M 50/553, H01M 10/052

(54) **BATTERY AND ELECTRICAL DEVICE**
BATTERIE UND ELEKTRISCHE VORRICHTUNG
BATTERIE ET DISPOSITIF ÉLECTRIQUE

(30) Priority: 25.06.2021 CN 202121435973 U
(43) Date of publication of application: 22.03.2023
(73) Proprietor: Contemporary Amperex Technology (Hong Kong) Limited, Central, Central And Western District (HK)
(72) Inventor: LIU, Xiaomei, Ningde Fujian 352100 (CN); YAO, Bin, Ningde Fujian 352100 (CN); LIU, Jiang, Ningde Fujian 352100 (CN)
(74) Representative: Gong, Jinping
(86) International application number: PCT/CN2022/084136
(87) International publication number: WO 2022/267602

(56) References cited:
- CN-A- 111 211 263
- CN-A- 111 668 402
- CN-A- 112 771 635
- CN-U- 211 828 968
- CN-U- 212 209 551
- CN-U- 213 212 256
- CN-U- 215 988 997
- US-A1- 2004 247 995
- US-A1- 2010 177 507
- US-A1- 2016 218 328

## Description

### CROSS-REFERENCE TO RELATED APPLICATIONS

This application claims priority to Chinese Patent Application No. 202121435973.X, filed on June 25, 2021 and entitled "BATTERY AND ELECTRICAL DEVICE".

### TECHNICAL FIELD

This application relates to the technical field of batteries, and in particular, to a battery and an electrical device as defined by the appended claim set.

### BACKGROUND

Batteries are widely used in the field of new energy such as electric vehicles and new energy vehicles, and the use of batteries has become a new trend in the development of the automotive industry.

In practical applications, the performance of an electrical device is greatly affected by an energy density and a lifespan of a battery. How to increase the energy density and lifespan of the battery is a problem that is constantly explored by a person skilled in the art. US 2004/247995 A1 describes a battery with arcuate end walls 12. US 2016/218328 A1 describes a battery module 10 includes a module housing 12, which has a bottom 14 and side walls 16. CN 112771635 A describes a power storage module 1 includes a plurality of power storage devices 2, a plurality of bus bars 4 and a housing 6.

### SUMMARY

This present invention aims to provide a battery and an electrical device as defined by the appended claim set to solve the problems of a low energy density and a short lifespan of the battery in the prior art.

Embodiments of this application are implemented in the following way:

According to a first aspect, an embodiment of this application provides a battery, including:
a housing, where the housing is a cellular structure and includes a plurality of chambers, and the chambers are prism-shaped; and
a plurality of electrode assemblies, where the plurality of electrode assemblies are disposed in the plurality of chambers, and at least one electrode assembly is disposed in each chamber; the battery further includes: an end cap assembly, an end cap assembly, where the end cap assembly is connected to the housing, and the end cap assembly is configured to seal openings that are of the plurality of chambers and that are located at a same end;
the end cap assembly includes a cover plate. A plurality of bulges are disposed on a side of the cover plate toward the housing. The plurality of bulges are inserted into the plurality of chambers in one-to-one correspondence. A peripheral face of each bulge is in abutment with an inner wall of the chamber in which the bulge is inserted.

In the technical solution of this application, a plurality of electrode assemblies are directly mounted into a housing containing a plurality of accommodation cavities to form an integrated battery. In contrast to the prior art in which each electrode assembly is placed in a separate housing to form an independent battery cell, no housing is required to enclose each electrode assembly separately in this application. This is equivalent to an effect that a plurality of battery cells share a sidewall, thereby reducing the material consumed by the housing, and reducing a packing clearance between adjacent housings. In this way, the mass of the housing is decreased, the space occupied by the housing is decreased, the space of the chamber increases, the electrode assemblies and electrolytic solution that can be accommodated in the chamber are increased, and in turn, the mass percent and the volume percent of the electrode assemblies and electrolytic solution in the battery are increased, and the effect of increasing the energy density is achieved. In addition, when a position on an existing battery is compressed, the housing of the battery cell corresponding to the compressed position withstands the pressure independently, making the battery cell at this position prone to crush. In contrast, the cellular housing disclosed in this application forms a whole. When a position on the battery is compressed, the entire housing withstands the pressure jointly, thereby diffusing the pressure, alleviating the problem of damage to the battery caused by extrusion from an external force, and in turn, increasing the lifespan of the battery.

In an embodiment of this application, each chamber is filled with an electrolytic solution, and the electrolytic solutions in the plurality of chambers do not communicate with each other.

In the foregoing technical solution, each chamber in the housing is relatively independent without communication to any other chamber. Therefore, the electrode assembly in each chamber can be independently charged and discharged, thereby preventing uncontrolled reactions in one chamber from affecting other chambers.

In an embodiment of this application, shapes of the chambers are a triangular prism, a quadrangular prism, or a hexagonal prism.

In the foregoing technical solution, when each chamber is a triangular prism, a quadrangular prism, or a hexagonal prism, the plurality of chambers can be just closely spliced, without leaving any special-shaped vacancy that is smaller than a chamber in volume. In this way, the mass of the housing is minimized, and the energy density is increased. In addition, because all chambers are in the same shape without leaving any special-shaped vacancies, it is convenient to process the housing uniformly.

In an embodiment of this application, the housing includes partition walls and a peripheral wall around the partition walls. The partition walls divide a space defined by the peripheral wall into a plurality of chambers, and the partition walls and the peripheral wall are integrally formed.

In the foregoing technical solution, the peripheral wall and the partition walls form a cellular structure, and the peripheral wall and the partition walls are integrally formed, thereby stabilizing the structure and enhancing the strength.

In an embodiment of this application, a thickness of each of the partition walls is equal to a thickness of the peripheral wall.

When the wall thickness varies, a position at which the thickness is different can withstand a different stress. A relatively thin position is able to withstand a lower stress, and a relatively thick position is prone to heat concentration, both making the housing unevenly deformable. The unevenly deformed housing exerts uneven pressures on components inside the battery. The components inside the battery are prone to deformation or damage, resulting in safety hazards. In the foregoing solution, the thicknesses of the partition walls and the thickness of the peripheral wall are equal, thereby effectively alleviating the safety problem of the battery.

In the foregoing technical solution, a plurality of electrode assemblies are placed into chambers from corresponding openings at the same end of the housing, and the openings of the plurality of chambers are sealed simultaneously by the same end cap assembly, thereby facilitating assembling.

In the foregoing technical solution, the cover plate is fitted to the housing steadily and accurately through a plurality of bulges, so that each chamber is sealed effectively.

In an embodiment of this application, the bulges are polygonal annular bulges.

In the foregoing technical solution, each bulge is hollowed out to form a polygonal annular shape, thereby reducing the material consumed by the cover plate, increasing the volume of the chamber, and effectively increasing the energy density.

In an embodiment of this application, the housing includes partition walls and a peripheral wall around the partition walls. The partition walls divide a space defined by the peripheral wall into a plurality of chambers. The end cap assembly includes a cover plate. A welding guide slot is disposed on a side of the cover plate, where the side is oriented away from the housing. A projection of the welding guide slot coincides with projections of the partition walls on the cover plate along a thickness direction of the cover plate. A bottom wall of the welding guide slot is welded to the partition walls.

In the foregoing technical solution, the welding guide slot is formed on the cover plate. The cover plate can accurately cover the housing according to the corresponding welding guide slot and the partition wall, thereby facilitating assembling. The welding guide slot also serves a function of guiding a welding path, and facilitates the welding process. The cover plate in thickness at the position of the welding guide slot is thinner than other positions. Therefore, the cover plate at the position of the welding guide slot is more meltable under heat, and the cover plate material at the welding guide slot and the corresponding partition wall are connected together to form a weld seam, thereby further facilitating the welding process and reducing the welding difficulty effectively.

In an embodiment of this application, the end cap assembly includes a cover plate and a plurality of electrode terminals. The plurality of electrode terminals are mounted onto the cover plate, and insulated from the cover plate. The plurality of electrode terminals are correspondingly connected to the plurality of electrode assemblies.

In the foregoing technical solution, each chamber forms an independent power supply unit. Each power supply unit independently outputs electrical energy through a corresponding electrode terminal, without mutual interference between the power supply units.

According to a second aspect, an embodiment of this application provides an electrical device, including the battery described above.

The electrical device in the technical solution of this application is powered by a battery with a high energy density and longevity, and achieves high performance.

### BRIEF DESCRIPTION OF DRAWINGS

To describe technical solutions in embodiments of this application more clearly, the following outlines the drawings to be used in the embodiments. Understandably, the following drawings show merely some embodiments of this application, and therefore, are not intended to limit the scope. A person of ordinary skill in the art may derive other related drawings from the drawings without making any creative efforts.
FIG. 1 is a schematic diagram of a vehicle according to an embodiment of this application;
FIG. 2 is a schematic front view of a battery according to an embodiment of this application;
FIG. 3 is a schematic exploded front view of a battery according to an embodiment of this application;
FIG. 4 is a schematic top view of a housing according to some embodiments of this application;
FIG. 5 is a schematic top view of a housing according to other embodiments of this application;
FIG. 6 is a schematic top view of a housing according to still other embodiments of this application;
FIG. 7 is a schematic top view of a battery according to some embodiments of this application;
FIG. 8 is a schematic top view of a cover plate assembly according to some embodiments of this application;
FIG. 9 is a close-up view of a part A shown in FIG. 8;
FIG. 10 is a schematic bottom view of a cover plate assembly according to some embodiments of this application;
FIG. 11 is a close-up view of a part B1 shown in FIG. 10;
FIG. 12 is a schematic bottom view of a cover plate assembly according to other embodiments of this application;
FIG. 13 is a close-up view of a part B2 shown in FIG. 12;
FIG. 14 shows an electrode terminal according to an embodiment this application; and
FIG. 15 shows another electrode terminal according to an embodiment this application.

Reference numerals: 1000-vehicle; 100-controller; 200-motor; 300-battery; 1-housing; 11-opening; 12-peripheral wall; 13-partition wall; 14-chamber; 2-end cap assembly; 21-cover plate; 211-welding guide slot; 212-bulge; 213-rabbet; 214-through-hole; 22-electrode terminal; 221-flat plate; 222-groove; 23-first insulation piece; 24-second insulation piece; 25-shield cover; 3-electrode assembly; 31-tab.

### DETAILED DESCRIPTION OF EMBODIMENTS

To make the objectives, technical solutions, and advantages of the embodiments of this application clearer, the following gives a clear description of the technical solutions in the embodiments of this application with reference to the drawings in the embodiments of this application. Evidently, the described embodiments are merely a part of but not all of the embodiments of this application. All other embodiments derived by a person of ordinary skill in the art based on the embodiments of this application without making any creative efforts fall within the protection scope of this application.

Unless otherwise defined, all technical and scientific terms used herein have the same meanings as usually understood by a person skilled in the technical field of this application. The terms used in the specification of this application are merely intended for describing specific embodiments but are not intended to limit this application. The terms "include" and "contain" and any variations thereof used in the specification, claims, and brief description of drawings of this application are intended as non-exclusive inclusion. The terms such as "first" and "second" used in the specification, claims, and brief description of drawings herein are intended to distinguish between different items, but are not intended to describe a specific sequence or order of precedence.

Reference to "embodiment" in this application means that a specific feature, structure or characteristic described with reference to the embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described in this application may be combined with other embodiments.

In the description of this application, unless otherwise expressly specified and defined, the terms "mount", "concatenate", "connect", and "attach" are understood in a broad sense. For example, a "connection" may be a fixed connection, a detachable connection, or an integrated connection; or may be a direct connection or an indirect connection implemented through an intermediary; or may be internal communication between two components. A person of ordinary skill in the art understands the specific meanings of the terms in this application according to the context.

"A plurality of" referred to in this application means two or more (including two). Similarly, "a plurality of groups" means two or more groups (including two groups), and "a plurality of pieces" means two or more pieces (including two pieces).

In this application, a battery may include a lithium-ion secondary battery, a lithium-ion primary battery, a lithium-sulfur battery, a sodium-lithium-ion battery, a sodium-ion battery, a magnesium-ion battery, or the like, and may be a solid-state battery, a half-solid-state battery, or the like, without being limited in embodiments of this application.

In the prior art, a battery generally means a stand-alone physical module that includes one or more battery cells to provide a higher voltage and a higher capacity. A battery typically includes a box configured to package one or more battery cells. The box can prevent liquid or other foreign matters from affecting the charging or discharging of the battery cells.

A battery cell includes an electrode assembly and an electrolyte. When the electrolyte is a solid-state electrolyte, the electrode assembly includes a positive electrode plate and a negative electrode plate. When the electrolyte is a liquid-state electrolyte (that is, an electrolytic solution), the electrode assembly includes a positive electrode plate, a negative electrode plate, and a separator. The battery cell works primarily by shuttling metal ions between the positive electrode plate and the negative electrode plate. The positive electrode plate includes a positive current collector and a positive active material layer. A surface of the positive current collector is coated with the positive active material layer. Of the current collector, a part not coated with the positive active material layer protrudes from a part coated with the positive active material layer, and the part not coated with the positive active material layer serves as a positive tab. Using a lithium-ion battery as an example, the positive current collector may be made of aluminum, and a positive active material may be lithium cobalt oxide, lithium iron phosphate, ternary lithium, lithium manganese oxide, or the like. The negative electrode plate includes a negative current collector and a negative active material layer. A surface of the negative current collector is coated with the negative active material layer. Of the current collector, a part not coated with the negative active material layer protrudes from a part coated with the negative active material layer, and the part not coated with the negative active material layer serves as a negative tab. The negative current collector may be made of copper, and a negative active material may be carbon, silicon, or the like. In order to ensure passage of a large current without fusing off, the positive tab is plural in number, and the plurality of positive tabs are stacked together; the negative tab is plural in number, and the plurality of negative tabs are stacked together. The separator may be made of polypropylene (PP), polyethylene (PE), or another material. In addition, the electrode assembly may be a jelly-roll structure or a stacked structure, without being limited herein.

In practical applications, the energy density and lifespan of a battery are essential indicators. The lifespan of the battery depends on a plurality of design factors, for example, energy density, cycle life, discharge capacity, charge rate, discharge rate, and other performance parameters.

An existing battery is usually made up of a plurality of battery cells. The plurality of battery cells are tightly packed into a group to improve the energy density. Through investigation, the inventor of this application finds that, in the battery constituted by a plurality of battery cells, the housing of each battery cell still occupies a space. In addition, a packing clearance exists between adjacent battery cells. Due to the existence of the packing clearance between adjacent housings of battery cells, the percentage of the electrode assemblies and the electrolytic solution in the entire space of the battery is relatively low, so that the energy density is relatively low. However, based on the prior art, it is difficult to enhance the energy density of existing batteries by further downsizing a battery cell housing and reducing the packing clearance between the housings.

In addition, when the existing battery is compressed, each battery cell withstands the pressure independently. The housing of the battery cell at the compressed position is prone to crush, thereby impairing the lifespan of the battery. In the prior art, there is a design in which the housings of a plurality of cylindrical battery cells are connected as a whole to enhance the pressure resistance of the battery. However, this design is essentially equivalent to increasing the material consumed by the housing. The added material fills the packing clearance between adjacent battery cells to connect the housings of the adjacent battery cells as a whole. This design increases the total mass of the battery and reduces the mass percent of the electrode assemblies and the electrolytic solution in the total mass of the battery, resulting in a further decrease in the energy density of the battery.

In view of this, in order to increase the energy density and lifespan of the battery, an embodiment of this application provides a technical solution. The battery includes a housing and a plurality of electrode assemblies. The housing is shaped as a cellular structure. Therefore, the housing includes a plurality of prismatic chambers. A plurality of electrode assemblies are accommodated in the plurality of chambers respectively, so that at least one electrode assembly resides in each chamber.

In other words, the electrode assembly and the electrolyte are disposed in each chamber of the housing directly, so that a plurality of power supply units capable of independently supplying power are formed in the housing. The plurality of prismatic chambers can be closely packed, without any packing clearance existent between adjacent chambers. The total size of the battery is reduced, and the percentage of the electrode assemblies and the electrolytic solution in the total volume of the battery is increased. In addition, the adjacent chambers share a sidewall, thereby further reducing the mass and volume of the housing, and further reducing the total volume and total mass of the battery. In this way, both the volume percent of the electrode assemblies and the electrolytic solution in the total volume of the battery and the mass percent in the total mass of the battery are further increased. Therefore, the energy density of the battery is increased by reducing the space occupied by the housing and the material consumed by the housing. In other words, in a case that the size of the battery in this embodiment is the same as that in the prior art, the battery in this embodiment saves the material of the housing, avoids the packing clearance between housings, reduces the mass of the housing, reduces the space occupied by the housing, increases the space of the chamber, and increases the electrode assemblies and electrolytic solution that can be accommodated in the chamber. Therefore, the mass percentage and the volume percentage of the electrode assemblies and electrolytic solution in the battery are increased, and the energy density of the battery is increased.

In addition, because the housing is designed as a cellular structure with prismatic chambers, when the battery is subjected to an external force along the height direction of the electrode assembly, all walls of the housing can jointly withstand the external force, so as to avoid damage caused by excessive local stress of the battery. The battery is more resistant to pressure, the components inside the battery are not prone to pressure-induced safety problems, and the battery life is longer.

All technical solutions described in the embodiments of this application are applicable to various battery-powered devices such as a mobile phone, a portable device, a laptop computer, an electric power cart, an electrical toy, an electric tool, an electric vehicle, a ship, and a spacecraft. The spacecraft includes an airplane, a rocket, a space shuttle, a spaceship, and the like.

Understandably, the technical solutions described in the embodiments of this application are not only applicable to the electrical devices described above, but also applicable to all battery-powered devices. However, for brevity, the following embodiments are described by using an electric vehicle as an example.

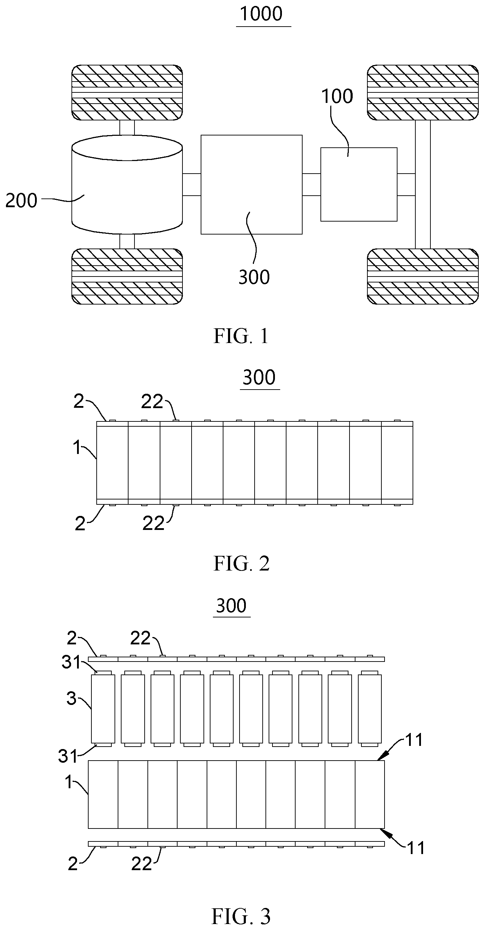

For example, as shown in FIG. 1, which shows a vehicle 1000 according to an embodiment of this application. The vehicle 1000 may be an oil-fueled vehicle, a natural gas vehicle, or a new energy vehicle. The new energy vehicle may be a battery electric vehicle, a hybrid electric vehicle, a range-extended electric vehicle, or the like. A controller 100, a motor 200, and a battery 300 may be disposed inside the vehicle 1000. The controller 100 is configured to control the battery 300 to supply power to the motor 200. For example, the battery 300 may be disposed at the bottom, front, or rear of the vehicle 1000. The battery 300 may be configured to supply power to the vehicle 1000. For example, the battery 300 may serve as an operating power supply of the vehicle 1000 to power a circuit system of the vehicle 1000. For example, the battery may be configured to meet operating power usage requirements of the vehicle 1000 that is being started or navigated or running. In another embodiment of this application, the battery 300 serves not only as an operating power supply of the vehicle 1000, but may also serve as a drive power supply of the vehicle 1000 to provide driving power for the vehicle 1000 in place of or partially in place of oil or natural gas.

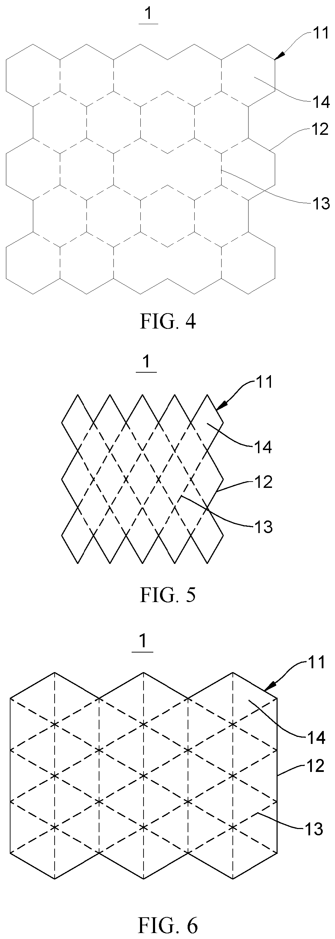

FIG. 2 is a schematic front view of an external structure of a battery 300; FIG. 3 is a schematic exploded front view of the battery 300; and FIG. 4 is a schematic structural top view of a housing 1. Referring to FIG. 2, FIG. 3, and FIG. 4, the battery 300 includes a housing 1, an end cap assembly 2, and a plurality of electrode assemblies 3.

The housing 1 is a cellular structure, and the housing 1 includes a plurality of chambers 14. Each chamber 14 is prism-shaped. The plurality of cavities 14 are configured to accommodate the electrode assemblies 3 respectively.

It is hereby noted that the shape of the electrode assembly 3 may be a quadrangular prism, a cylindrical shape, or the like. The electrode assemblies 3 in this embodiment are in the shape of cylinders. The electrode assemblies 3 expand during the charge-and-discharge cycles. After a cylindrical electrode assembly 3 expands, the peripheral face of the electrode assembly does not fully abut against the inner wall of the prismatic chamber 14, and there is still remaining space between the electrode assembly 3 and the chamber 14. The remaining space plays the role of releasing an expansion stress of the electrode assembly 3, and can alleviate the problem of damage caused by excessive stress in the electrode assembly 3, thereby avoiding performance fading of the battery 300, and further improving the power supply performance and lifespan of the battery 300.

An opening 11 is made on at least one end of each chamber 14 to allow loading of the electrode assembly 3. On each chamber 14, one opening 11 may be made, or two openings 11 may be made. When one opening 11 is made on each chamber 14, the openings 11 of a plurality of chambers 14 may be located at the same end of the housing 1. That is, the openings 11 of all the chambers 14 are located at the same end of the housing 1. When one opening 11 is made on each chamber 14, the openings 11 of a plurality of chambers 14 may be located at different ends of the housing 1 instead. That is, the openings 11 of some chambers 14 are located at one end of the housing 1, and the openings 11 of other chambers 14 are located at the other end of the housing 1. When two openings 11 are made on each chamber 14, an opening 11 is made at both ends of the housing 1 at the positions that correspond to the chambers 14 respectively.

The number of end cap assemblies 2 is set depending on the arrangement of the openings 11 of the plurality of chambers 14. The end cap assembly 2 includes a cover plate 21. The cover plate 21 is configured to seal the openings 11 of the plurality of chambers 14. In some embodiments, the opening 11 in communication with the chamber 14 is made at just one end of the housing 1, and there is just one end cap assembly 2. The end cap assembly 2 corresponds to one end of the housing 1, and the cover plate 21 thereof seals the openings 11 of all the chambers 14. In other embodiments, the openings 11 of the chambers 14 are made at both ends of the housing 1. As shown in FIG. 3, two end cap assemblies 2 are disposed. The two end cap assemblies 2 correspond to the two ends of the housing 1 respectively. The cover plate 21 of one end cap assembly 2 seals the openings 11 of a plurality of chambers 14 at one end of the housing 1. The cover plate 21 of the other end cap assembly 2 seals the openings 11 of the plurality of chambers 14 at the other end of the housing 1.

Specifically, the housing 1 includes partition walls 13 and an peripheral wall 12. Referring to FIG. 4, the dashed line in FIG. 4 represents the partition walls 13, and the solid line represents the peripheral wall 12. It is hereby noted that in the drawings of this application, the dashed line and the solid line are made merely for ease of observation. When the housing 1 is viewed from top or from bottom, both the partition walls 13 and the peripheral wall 12 are visible. The peripheral wall 12 surrounds the partition walls 13. The partition walls 13 divide the space defined by the peripheral wall 12 into a plurality of prismatic spaces, thereby forming a cellular structure. Each prismatic space is a chamber 14.

The chambers 14 in FIG. 4 are shaped as hexagonal prisms. In other embodiments, the chambers 14 may be shaped as quadrangular prisms or triangular prisms instead. As shown in FIG. 5, the chambers 14 are in the shape of quadrangular prisms. The projection of each chamber 14 along the height direction of the electrode assembly 3 is a parallelogram. As shown in FIG. 6, the chambers 14 are in the shape of triangular prisms. The projection of each chamber 14 along the height direction of the electrode assembly 3 is a triangle. By disposing each chamber 14 as a triangular prism, a quadrangular prism, or a hexagonal prism, all the chambers 14 are identical in shape, without leaving any special-shaped vacancy between adjacent chambers 14. In other words, the partition walls 13 have the same thickness in all positions. Therefore, it is convenient to process the housing 1, the volume percent of the chambers 14 is high, and the energy density is high.

In a case that a position on the partition walls 13 is different in thickness, the capabilities of the thickness-different position in withstanding stress and conducting heat are different. Generally, a relatively thin position is less capable of withstanding stress, and a relatively thick position is prone to heat concentration. Consequently, uneven deformation tends to occur, and may lead to damage or thermal runaway of the battery 300 and result in safety hazards. In this embodiment, all positions on the partition walls 13 are identical in thickness, and therefore, the partition walls 13 are equally capable of withstanding stress and conducting heat in all positions, thereby effectively enhancing the safety performance and lifespan of the battery 300.

In some embodiments, the thickness of the peripheral wall 12 is equal to the thickness of the partition walls 13, thereby further alleviating the problems of uneven deformation and uneven heat dissipation, and enhancing the safety performance and lifespan of the battery 300.

In some embodiments, the partition walls 13 and the peripheral wall 12 are formed separately, and then assembled and connected as a whole. Assembling clearances between the partition walls 13 and the peripheral wall 12 are sealed hermetically, so that the chambers 14 do not communicate with each other by means of the assembling clearances.

In some embodiments, the partition walls 13 and the peripheral wall 12 are integrally formed such as injection-molded, without leaving any clearance between sidewalls of the chambers 14, so as to prevent communication between the chambers.

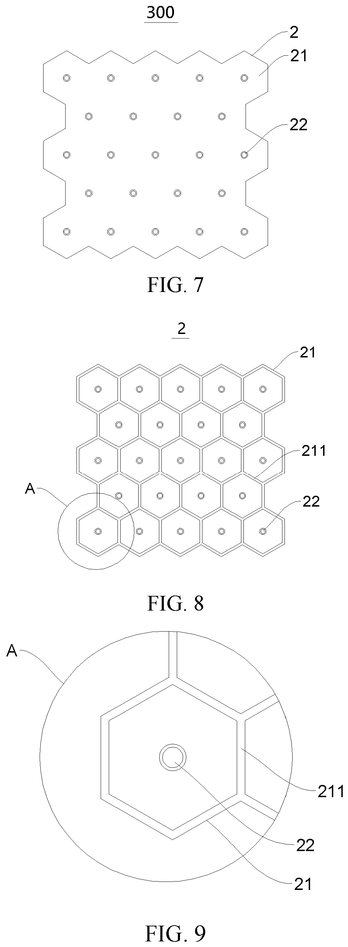

To prevent the chambers 14 from communicating with each other through the position of the opening 11, when the cover plate 21 of the end cap assembly 2 is connected to the end of the housing 1, each opening 11 at this end is sealed. FIG. 7 is a schematic top view of a battery 300, in which the outer surface of the end cap assembly 2 (that is, the side of the cover plate 21, which is oriented away from the housing 1, or in other words, the side of the cover plate 21, which is oriented away from the electrode assembly 3) is visible.

For example, a binder is applied to the end of the housing 1, or a binder is applied to the inner surface of the cover plate 21 (that is, the side of the cover plate 21, which is close to the housing 1, or in other words, the side of the cover plate 21, which is close to the electrode assembly 3), and then the cover plate 21 is aligned with and fitted to the housing 1 to implement bonding and fixing.

For another example, after the cover plate 21 is aligned with and fitted to the housing 1, the cover plate 21 is hot-melted and welded to the partition walls 13 and the peripheral wall 12 at the positions corresponding to the partition walls 13 and the peripheral wall 12.

For ease of welding, as shown in FIG. 8 and FIG. 9, a welding guide slot 211 is formed on the outer surface of the cover plate 21. When the cover plate 21 is fitted to the housing 1, the protection of the welding guide slot 211 at least coincides with the projections of the partition walls 13 on the cover plate 21 along the thickness direction of the cover plate 21. In some embodiments, the projection of the welding guide slot 211 not only coincides with the projections of the partition walls 13 on the cover plate 21 along the thickness direction of the cover plate 21, but also coincides with the projection of the peripheral wall 12 on the cover plate 21 along the thickness direction of the cover plate 21.

In other words, the welding guide slot 211 extends along the projections of the partition walls 13 and the peripheral wall 12 on the cover plate 21 in the thickness direction of the cover plate 21, and the partition walls 13 and the peripheral wall 12 are located on the back of a bottom wall of the welding guide slot 211. By heating the bottom wall of the welding guide slot 211, the cover plate 21 can be hot-melted and welded to the partition walls 13 or the peripheral wall 12. Because the bottom wall of the welding guide slot 211 is thinner than other positions on the cover plate 21, the bottom wall of the welding guide slot 211 is more hot-meltable under heat, thereby reducing the difficulty of welding the cover plate 21, the partition walls 13, and the peripheral wall 12 into a whole.

During the welding operation, the welding guide slot 211 further plays a role of guiding a welding path, thereby avoiding blind welding carried out without seeing the partition walls 13 and the peripheral wall 12, and further reducing the difficulty of the welding process.

In some embodiments, the width of the welding guide slot 211 is less than or equal to the thickness of the corresponding partition wall 13 or the peripheral wall 12, thereby narrowing the easily hot-meltable region on the cover plate 21 and preventing the bottom wall of the welding guide slot 211 from being hot-melted and falling into the chamber 14. This further ensures reliable welding of the bottom wall of the welding guide slot 211 to the partition walls 13 and the peripheral wall 12.

The plurality of chambers 14 are sealed under a joint action of the peripheral wall 12, the partition walls 13, and the cover plate 21. The chambers 14 are independent of each other without communicating with each other. In other words, when an electrolytic solution fills in the plurality of chambers 14, the electrolytic solution is not communicated between the plurality of chambers 14. In this way, when reaction runaway occurs in a chamber 14, the resulting heat, gas, and the like are prevented from flowing to other chambers 14. Therefore, on the one hand, this cuts off the feeding of the reacting ingredient, reduces the probability of domino runaway reactions of active substances in other chambers 14 as affected, and minimizes the intensity of the runaway reaction. Even if occurring due to heat and impact generated by the runaway reaction in the runaway chamber 14, the domino runaway reaction in other chambers 14 is deferred, thereby leaving more time for the user to respond, and effectively improving the safety performance of the battery 300. On the other hand, because the runaway reaction is isolated in one chamber 14 and imposes little impact on the surrounding chambers 14, the damage to the battery 300 is reduced to a relatively low level. After the runaway reaction stops, the chamber 14 in which the runaway reaction occurs stops functioning, and the remaining chambers 14 can still react in an orderly manner to provide some electrical energy, thereby extending the lifespan of the battery 300.

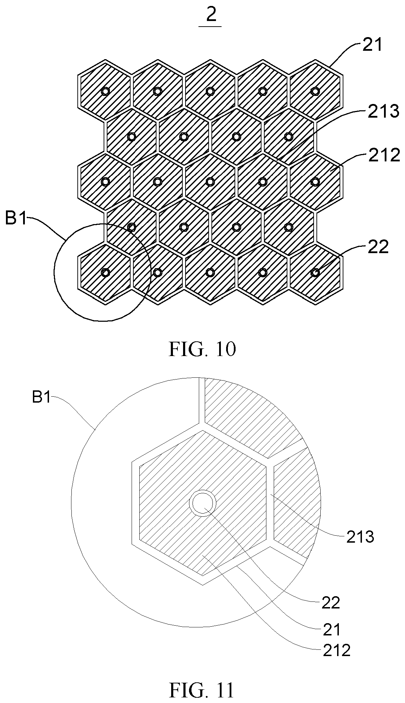

To ensure accuracy of fitting the end cap assembly 2 to the housing 1, as shown in FIG. 10 and FIG. 11, the shaded parts in FIG. 10 and FIG. 11 indicate bulges 212. A plurality of bulges 212 are disposed on the inner surface of the cover plate 21. The plurality of bulges 212 are in one-to-one correspondence with the plurality of chambers 14 on the housing 1.

The projections of the prismatic chambers 14 on the cover plate 21 along the thickness direction of the cover plate 21 are in the same shape as the bulges 212. That is, all the projections of the plurality of prismatic chambers 14 on the cover plate 21 along the thickness direction of the cover plate 21 are polygonal projections, all the plurality of bulges 212 are designed as polygonal bulges 212, and the polygonal projections coincide with the polygonal bulges 212.

A rabbet 213 is formed between adjacent bulges 212. The width of the rabbet 213 is the same as the thickness of the partition wall. The rabbets 213 are configured to accommodate the partition walls 13 and the peripheral wall 12. Therefore, the rabbets 213 on the inner surface of the cover plate 21 correspond to the positions of the welding guide slots 211 on the outer surface of the cover plate 21. In this way, in a process of fitting the cover plate 21 to the housing 1, the welding guide slots 211 serve to guide the assembling. The cover plate 21 can accurately overlay the housing 1 by letting the welding guide slots 211 on the outer surface of the cover plate 21 correspond to the peripheral wall 12 and the partition walls 13.

After the cover plate 21 is fitted to the housing 1, the plurality of bulges 212 are inserted into the plurality of chambers 14 in one-to-one correspondence. A peripheral face of each bulge 212 is in abutment with an inner wall of the chamber 14 in which the bulge is inserted. The partition walls 13 and the peripheral wall 12 are inserted into the rabbets 213. The surfaces of the partition walls 13 and the peripheral wall 12 are in abutment with the inner wall of the rabbets 213. The plurality of bulges 212 not only enable the cover plate 21 to be accurately and stably fitted to the housing 1, but also further block the plurality of chambers 14, thereby improving the sealing effect.

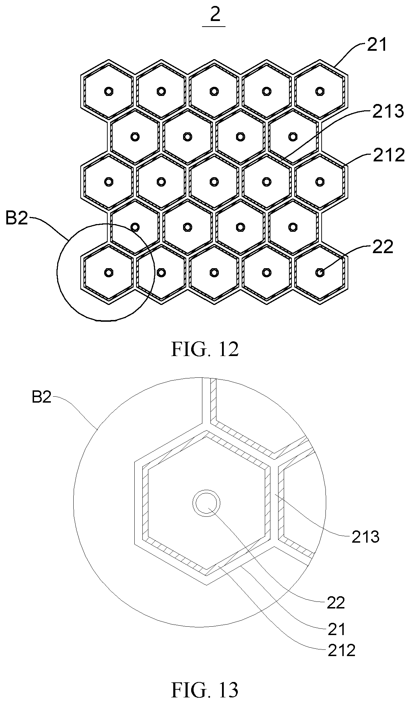

In some embodiments, as shown in FIG. 12 and FIG. 13, each bulge 212 is hollowed out to form a ring shape. That is, the bulges 212 are shaped as polygonal annular bulges 212. With the bulges 212 being shaped as polygonal annular bulges 212, the cover plate 21 consumes less material, the bulges 212 occupy less space in the chambers 14, the chambers 14 can accommodate a larger volume of the electrode assemblies 3 and the electrolytic solution, thereby increasing the energy density of the battery 300 effectively.

At least one electrode assembly 3 is disposed in each chamber 14 of the housing 1. Each chamber 14 is filled with the electrolytic solution, so that each chamber 14 forms an independent power supply unit. To ensure each power supply unit to supply power independently, a tab 31 is disposed at both ends of the electrode assembly 3 separately. Each end cap assembly 2 further includes a plurality of electrode terminals 22. The plurality of electrode terminals 22 are in one-to-one correspondence with the plurality of chambers 14, and each electrode terminal is connected to a tab 31 at one end of an electrode assembly 3 in the corresponding chamber 14. It is hereby noted that the electrolytic solution may be replaced with a solid electrolyte. The specific type of the electrolyte depends on the type of the battery 300, and is not limited in this application.

As shown in FIG. 12 and FIG. 13, the plurality of electrode terminals 22 are mounted on the cover plate 21, and insulated from the cover plate (21). The positions of the plurality of electrode terminals 22 correspond to the positions of the plurality of chambers 14. When the cover plate 21 is connected to one end of the housing 1 and seals the openings 11 of the plurality of chambers 14, each electrode terminal 22 can be connected to the tab 31 at one end of the electrode assembly 3 in the corresponding chamber 14. Therefore, the plurality of power supply units in the housing 1 can output electrical energy outward through the electrode terminals 22 respectively.

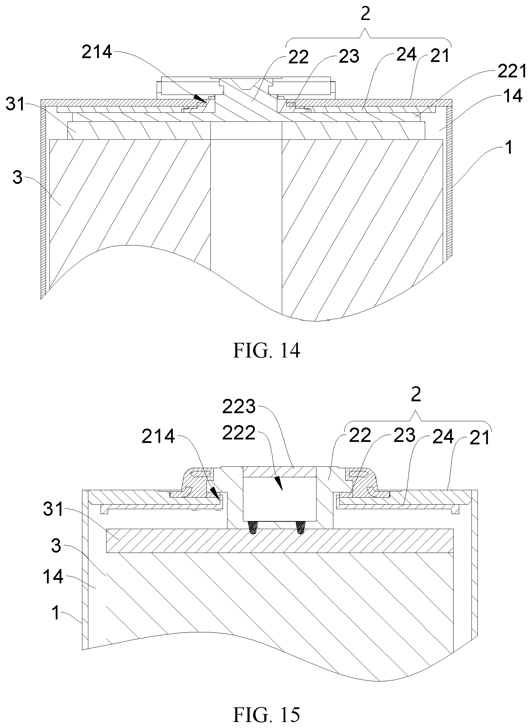

In some embodiments, after the cover plate 21 is fitted to the housing 1, the plurality of electrode terminals 22 closely fit with the plurality of tabs 31 in one-to-one correspondence to implement electrical connection. As shown in FIG. 14, FIG. 14 shows an example in which an electrode assembly 3 in a chamber 14 in the housing 1 is connected to an electrode terminal 22. A through-hole 214 is formed on the cover plate 21 to allow passage of the electrode terminal 22. The electrode terminal 22 is passed through the through-hole 214 so as to be mounted onto the cover plate 21. One end of the electrode terminal 22 is located inside the chamber 14 of the housing 1, and the other end is located outside the chamber 14 of the housing 1. One end of the electrode terminal 22 contacts the tab 31 of the electrode assembly 3 to output electrical energy from the other end.

When the cover plate 21 is made of a conductive material, the end cap assembly 2 further includes a first insulation piece 23 and a second insulation piece 24. The first insulation piece 23 and the second insulation piece 24 are configured to mount the electrode terminal 22 onto the cover plate 21, and insulated from the cover plate 21;. The first insulation piece 23 extends inward along a clearance between the electrode terminal 22 and the cover plate 21 from the outer surface of the cover plate 21 (that is, the side of the cover plate 21, which is oriented away from the housing 1 or away from the electrode assembly 3), so as to separate the electrode terminal 22 from the hole wall of the through-hole 214 on the cover plate 21. The second insulation piece 24 is located between the other end of the electrode terminal 22 and the inner surface of the cover plate 21, so as to separate the electrode assembly 3 from the inner surface of the cover plate 21 (that is, the side of the cover plate 21, which is close to the housing 1 or close to the electrode assembly 3).

In some embodiments, one end of the electrode terminal 22, which is close to the electrode assembly 3, is enlarged in diameter to form a flat plate 221. After the cover plate 21 is fitted onto the housing 1, the flat plate 221 presses down tightly on the surface of the tab 31 to ensure effective contact between the electrode terminal 22 and the tab 31 of the electrode assembly 3, and implement electrical connection.

In other embodiments, as shown in FIG. 15, a plurality of through-holes 214 are formed on the cover plate 21. A plurality of electrode terminals 22 pass through the plurality of through-holes 214 respectively. After the cover plate 21 is fitted onto the housing 1, the plurality of electrode terminals 22 are in one-to-one correspondence with the plurality of tabs 31. The electrode terminals 22 are connected to the corresponding tabs 31 by means of penetration welding, butt fusion welding, and the like, so as to implement electrical connection.

When the cover plate 21 is made of a conductive material, the end cap assembly 2 further includes a first insulation piece 23 and a second insulation piece 24. The first insulation piece 23 covers a part of the inner wall of the through-hole 214 and the outer surface that is of the cover plate 21 and that is close to the through-hole 214. The second insulation piece 24 covers the inner surface of the cover plate 21 and the remaining inner wall of the through-hole 214. In this way, the first insulation piece 23 and the second insulation piece 24 consecutively cover the entire inner wall of the through-hole 214, separate the electrode assembly 3 from the inner surface of the cover plate 21, and separate the electrode terminal 22 from the hole wall of the through-hole 214 on the cover plate 21, so as to mount the electrode terminal 22 onto the cover plate 21, and insulated from the cover plate 21;.

In some embodiments, the electrode terminal 22 forms a structure on which a groove 222 is made. The position of the groove 222 corresponds to the position of the tab 31. The groove 222 formed on the electrode terminal 22 reduces the thickness of a position that is on the electrode terminal 22 and configured to weld to the tab 31, thereby facilitating the welding between the electrode terminal 22 and the tab 31. As shown in FIG. 15, when the cover plate 21 is fitted to the housing 1, the bottom wall of the groove 222 fits closely with the tab 31 of the electrode assembly 3. The bottom wall of the groove 222 is welded to the tab 31 of the electrode assembly 3 by welding such as butt fusion welding and penetration welding.

In some embodiments, as shown in FIG. 15, the electrode terminal 22 further includes a shield cover 25. After the electrode terminal 22 is welded to the tab 31, the shield cover 25 is connected to an end of the electrode terminal 22, where the end is oriented away from the electrode assembly 3. That is, the shield cover 25 is located at the opening position of the groove 222 to block the groove 222 and protect a junction between the electrode terminal 22 and the tab 31. The shield cover 25 may be made of an insulation material or made of a conductive material.

Optionally, the battery 300 may further include other structures. For example, the battery 300 may further include a busbar component (not shown in the drawing). The busbar component is configured to implement electrical connection between the plurality of electrode terminals 22, such as parallel connection, series connection, or series-and-parallel connection. Further, the busbar component may be fixed to the electrode terminals 22 by welding. Electrical energy of a plurality of power supply units may be further led out by a conductive mechanism. Optionally, the conductive mechanism may also belong to the busbar component.

For a battery 300, main safety hazards come from a charging process and a discharging process. In addition, appropriate ambient temperature design is required. To effectively avoid unnecessary losses, the battery 300 according to an embodiment of this application further includes a switch element (not shown in the drawing). The switch element is an element that, when a temperature or resistance in the battery 300 reaches a given threshold, causes the battery 300 to stop charging or discharging.

The number of switch elements is plural. The plurality of switch elements are mounted in a plurality of chambers 14 of the housing 1 in one-to-one correspondence. When the temperature or resistance in a chamber 14 reaches a threshold, the corresponding switch element causes stoppage of charging or discharging of a power supply unit formed in the chamber 14.

The battery 300 according to this embodiment of this application further includes a plurality of pressure relief mechanisms (not shown in the drawing). The pressure relief mechanisms mean elements or components that are actuated to relieve an internal pressure or temperature when the internal pressure or temperature of the battery 300 reaches a preset threshold. The threshold may vary depending on design requirements. The threshold may depend on the material of one or more of the positive electrode plate, the negative electrode plate, the electrolytic solution, or the separator in the power supply unit.

The number of pressure relief mechanisms is plural. All the plurality of pressure relief mechanisms are mounted on the cover plate 21. When the cover plate 21 is fitted to the housing 1, the plurality of pressure relief mechanisms are in one-to-one correspondence with the plurality of chambers 14 of the housing 1. When the internal pressure or temperature in a chamber 14 reaches the preset threshold, a corresponding pressure relief mechanism is actuated to relieve the internal pressure or temperature of the chamber 14.

The embodiments described above are merely exemplary embodiments of this application, but are not intended to limit this application. To a person skilled in the art, various modifications and variations may be made to this application.

## Claims

1. A battery (300), comprising:
a housing (1), wherein the housing (1) is a cellular structure and comprises a plurality of chambers (14), and the chambers (14) are prism-shaped; and
a plurality of electrode assemblies (3), wherein the plurality of electrode assemblies (3) are disposed in the plurality of chambers (14), and at least one electrode assembly (3) is disposed in each chamber (14);
wherein the battery (300) further comprises:
an end cap assembly (2), wherein the end cap assembly (2) is connected to the housing (1), and the end cap assembly (2) is configured to seal openings (11) that are of the plurality of chambers (14) and that are located at a same end;
wherein the end cap assembly (2) comprises a cover plate (21), a plurality of bulges (212) are disposed on a side of the cover plate (21) toward the housing (1), the plurality of bulges (212) are inserted into the plurality of chambers (14) in one-to-one correspondence, and a peripheral face of each bulge (212) is in abutment with an inner wall of the chamber (14) in which the bulge (212) is inserted.

2. The battery (300) according to claim 1, wherein each chamber (14) is filled with an electrolytic solution, and the electrolytic solutions in the plurality of chambers (14) do not communicate with each other.

3. The battery (300) according to claim 1 or 2, wherein shapes of the chambers (14) are a triangular prism, a quadrangular prism, or a hexagonal prism.

4. The battery (300) according to any one of claims 1 to 3, wherein the housing (1) comprises partition walls (13) and a peripheral wall (12) around the partition walls (13), the partition walls (13) divide a space defined by the peripheral wall (12) into a plurality of chambers (14), and the partition walls (13) and the peripheral wall (12) are integrally formed.

5. The battery (300) according to claim 4, wherein a thickness of each of the partition walls (13) is equal to a thickness of the peripheral wall (12).

6. The battery (300) according to claim 1, wherein the bulges (212) are polygonal annular bulges (212).

7. The battery (300) according to any one of claims 1 to 6, wherein the housing (1) comprises partition walls (13) and a peripheral wall (12) around the partition walls (13), the partition walls (13) divide a space defined by the peripheral wall (12) into a plurality of chambers (14); and
the end cap assembly (2) comprises a cover plate (21), a welding guide slot (211) is disposed on a side of the cover plate (21), wherein the side is oriented away from the housing (1), a projection of the welding guide slot (211) coincides with projections of the partition walls (13) on the cover plate (21) along a thickness direction of the cover plate (21), and a bottom wall of the welding guide slot (211) is welded to the partition walls (13).

8. The battery (300) according to any one of claims 1 to 7, wherein the end cap assembly (2) comprises a cover plate (21) and a plurality of electrode terminals (22), the plurality of electrode terminals (22) are mounted onto the cover plate (21),and insulated from the cover plate (21); and the plurality of electrode terminals (22) are correspondingly connected to the plurality of electrode assemblies (3).

9. An electrical device, comprising the battery (300) according to any one of claims 1 to 8.

## Patentansprüche

1. Batterie (300), die Folgendes umfasst:
ein Gehäuse (1), wobei das Gehäuse (1) eine Zellstruktur ist und mehrere Kammern (14) umfasst und die Kammern (14) prismenförmig sind; und
mehrere Elektrodenanordnungen (3), wobei die mehreren Elektrodenanordnungen (3) in den mehreren Kammern (14) angeordnet sind und mindestens eine Elektrodenanordnung (3) in jeder Kammer (14) angeordnet ist;
wobei die Batterie (300) ferner Folgendes umfasst:
eine Endkappenanordnung (2), wobei die Endkappenanordnung (2) mit dem Gehäuse (1) verbunden ist und die Endkappenanordnung (2) dazu ausgelegt ist, Öffnungen (11) abzudichten, die von den mehreren Kammern (14) sind und die an einem gleichen Ende angeordnet sind;
wobei die Endkappenanordnung (2) eine Abdeckplatte (21) umfasst, mehrere Verdickungen (212) auf einer Seite der Abdeckplatte (21) in Richtung des Gehäuses (1) angeordnet sind, die mehreren Verdickungen (212) in die mehreren Kammern (14) in Eins-zu-Eins-Entsprechung eingesetzt sind und eine Umfangsfläche jeder Verdickung (212) an einer Innenwand der Kammer (14) anliegt, in der die Verdickung (212) eingesetzt ist.

2. Batterie (300) nach Anspruch 1, wobei jede Kammer (14) mit einer elektrolytischen Lösung gefüllt ist und die elektrolytischen Lösungen in den mehreren Kammern (14) nicht miteinander kommunizieren.

3. Batterie (300) nach Anspruch 1 oder 2, wobei Formen der Kammern (14) ein dreieckiges Prisma, ein viereckiges Prisma oder ein hexagonales Prisma sind.

4. Batterie (300) nach einem der Ansprüche 1 bis 3, wobei das Gehäuse (1) Trennwände (13) und eine Umfangswand (12) um die Trennwände (13) herum umfasst, wobei die Trennwände (13) einen durch die Umfangswand (12) definierten Raum in mehrere Kammern (14) unterteilen und die Trennwände (13) und die Umfangswand (12) integral ausgebildet sind.

5. Batterie (300) nach Anspruch 4, wobei eine Dicke jeder der Trennwände (13) gleich einer Dicke der Umfangswand (12) ist.

6. Batterie (300) nach Anspruch 1, wobei die Verdickungen (212) polygonale ringförmige Verdickungen (212) sind.

7. Batterie (300) nach einem der Ansprüche 1 bis 6, wobei das Gehäuse (1) Trennwände (13) und eine Umfangswand (12) um die Trennwände (13) herum umfasst, wobei die Trennwände (13) einen durch die Umfangswand (12) definierten Raum in mehrere Kammern (14) unterteilen; und wobei die Endkappenanordnung (2) eine Abdeckplatte (21) umfasst, ein Schweißführungsschlitz (211) auf einer Seite der Abdeckplatte (21) angeordnet ist, wobei die Seite vom Gehäuse (1) weg gerichtet ist, ein Vorsprung des Schweißführungsschlitzes (211) mit Vorsprüngen der Trennwände (13) an der Abdeckplatte (21) entlang einer Dickenrichtung der Abdeckplatte (21) zusammenfällt, und eine Bodenwand des Schweißführungsschlitzes (211) mit den Trennwänden (13) verschweißt ist.

8. Batterie (300) nach einem der Ansprüche 1 bis 7, wobei die Endkappenanordnung (2) eine Abdeckplatte (21) und mehrere Elektrodenanschlüsse (22) umfasst, die mehreren Elektrodenanschlüsse (22) auf der Abdeckplatte (21) montiert und von der Abdeckplatte (21) isoliert sind; und die mehreren Elektrodenanschlüsse (22) entsprechend mit den mehreren Elektrodenanordnungen (3) verbunden sind.

9. Elektrische Vorrichtung, die die Batterie (300) nach einem der Ansprüche 1 bis 8 umfasst.

## Revendications

1. Batterie (300), comprenant :
un logement (1), le logement (1) étant une structure cellulaire et comprenant une pluralité de chambres (14), et les chambres (14) étant en forme de prisme ; et
une pluralité d'ensembles électrodes (3), la pluralité d'ensembles électrodes (3) étant disposée dans la pluralité de chambres (14), et au moins un ensemble électrode (3) étant disposé dans chaque chambre (14) ;
la batterie (300) comprenant en outre :
un ensemble capuchon d'extrémité (2), l'ensemble capuchon d'extrémité (2) étant connecté au logement (1), et l'ensemble capuchon d'extrémité (2) étant configuré pour sceller des ouvertures (11) qui sont de la pluralité de chambres (14) et qui sont situées au niveau d'une même extrémité ;
l'ensemble capuchon d'extrémité (2) comprenant une plaque de couverture (21), une pluralité de renflements (212) étant disposée sur un côté de la plaque de couverture (21) vers le logement (1), la pluralité de renflements (212) étant insérée dans la pluralité de chambres (14) en correspondance biunivoque, et une face périphérique de chaque renflement (212) étant en butée avec une paroi interne de la chambre (14) dans laquelle le renflement (212) est inséré.

2. Batterie (300) selon la revendication 1, dans laquelle chaque chambre (14) est remplie d'une solution électrolytique, et les solutions électrolytiques dans la pluralité de chambres (14) ne communiquent pas entre elles.

3. Batterie (300) selon la revendication 1 ou la revendication 2, dans laquelle des formes des chambres (14) sont un prisme triangulaire, un prisme quadrangulaire, ou un prisme hexagonal.

4. Batterie (300) selon l'une quelconque des revendications 1 à 3, dans laquelle le logement (1) comprend des parois de partition (13) et une paroi périphérique (12) autour des parois de partition (13), les parois de partition (13) divisent un espace défini par la paroi périphérique (12) en une pluralité de chambres (14), et les parois de partition (13) et la paroi périphérique (12) sont formées d'un seul tenant.

5. Batterie (300) selon la revendication 4, dans laquelle une épaisseur de chacune des parois de partition (13) est égale à une épaisseur de la paroi périphérique (12).

6. Batterie (300) selon la revendication 1, dans laquelle les renflements (212) sont des renflements annulaires polygonaux (212).

7. Batterie (300) selon l'une quelconque des revendications 1 à 6, dans laquelle le logement (1) comprend des parois de partition (13) et une paroi périphérique (12) autour des parois de partition (13), les parois de partition (13) divisent un espace défini par la paroi périphérique (12) en une pluralité de chambres (14), et
l'ensemble capuchon d'extrémité (2) comprend une plaque de couverture (21), une fente de guidage de soudage (211) est disposée sur un côté de la plaque de couverture (21), le côté étant orienté à l'écart du logement (1), une saillie de la fente de guidage de soudage (211) coïncidant avec des saillies des parois de partition (13) sur la plaque de couverture (21) le long d'une direction d'épaisseur de la plaque de couverture (21), et une paroi inférieure de la fente de guidage de soudage (211) étant soudée aux parois de partition (13).

8. Batterie (300) selon l'une quelconque des revendications 1 à 7, dans laquelle l'ensemble capuchon d'extrémité (2) comprend une plaque de couverture (21) et une pluralité de bornes d'électrode (22), la pluralité de bornes d'électrode (22) sont montées sur la plaque de couverture (21), et isolées de la plaque de couverture (21) ; et la pluralité de bornes d'électrode (22) sont connectées de manière correspondante à la pluralité d'ensembles électrodes (3).

9. Dispositif électrique, comprenant la batterie (300) selon l'une quelconque des revendications 1 à 8.
